Europäisches Patentamt

European Patent Office (11) Numéro de publication : **0 025 924**

Office européen des brevets **B1**

(12) **FASCICULE DE BREVET EUROPÉEN**

(45) Date de publication du fascicule du brevet :
11.05.83

(51) Int. Cl.³ : **G 05 G 3/00**

(21) Numéro de dépôt : **80105348.9**

(22) Date de dépôt : **08.09.80**

(54) Fourchette de commande pour coulisseau de boîte de vitesses.

(30) Priorité : 20.09.79 FR 7923443

(43) Date de publication de la demande :
01.04.81 Bulletin 81/13

(45) Mention de la délivrance du brevet :
11.05.83 Bulletin 83/19

(84) Etats contractants désignés :
BE DE GB IT NL SE

(56) Documents cités :
DE C 2 425 514
FR A 1 482 014
FR A 1 561 563
FR A 1 600 221
GB A 957 889
US A 3 257 861

(73) Titulaire : REGIE NATIONALE DES USINES RENAULT
Boîte postale 103 8-10 avenue Emile Zola
F-92109 Boulogne-Billancourt (FR)

(72) Inventeur : Lamy, Jean-Michel
9, Villa Brune
F-75014 Paris (FR)
Inventeur : Egret, Jacques
21, rue de Borderie
F-87340 Les-Clayes-sous-Bois (FR)

(74) Mandataire : Casalonga, Axel et al
BUREAU D.A. CASALONGA OFFICE JOSSE & PETIT
Baaderstrasse 12-14
D-8000 München 5 (DE)

Jouve, 18, rue St-Denis, 75001 Paris, France

## Fourchette de commande pour coulisseau de boîte de vitesses

La présente invention est relative à une fourchette de commande de synchronisation et de crabotage destinée à coopérer avec un coulisseau de boîte de vitesses par exemple pour véhicule automobile. Les fourchettes de commande de ce type comportent habituellement deux bras qui viennent entourer la périphérie d'un baladeur entraîné en rotation lors du fonctionnement de la boîte de vitesses. Ces fourchettes de commande doivent être suffisamment résistantes pour absorber les efforts de synchronisation qu'elles transmettent lors du fonctionnement de la boîte de vitesses. Par ailleurs les extrémités de leurs bras entrant en contact avec la surface extérieure du baladeur doivent présenter un faible coefficient de frottement et une grande résistance à l'usure.

De telles fourchettes de commande sont fréquemment réalisées par moulage d'un alliage cuproaluminium qui permet d'assurer aux extrémités des bras de la fourchette de bonnes caractéristiques de frottement, la fourchette présentant par ailleurs grâce à l'utilisation de ce matériau une bonne résistance mécanique. L'utilisation du laiton fournit les mêmes avantages. Par contre ces deux matériaux entraînent une augmentation importante du poids de la fourchette de commande et sont par ailleurs d'un prix élevé.

Des fourchettes de commande réalisées par moulage en fonte ou en acier, si elles présentent une bonne résistance mécanique pour absorber les efforts de synchronisation ne possèdent cependant pas des qualités convenables en ce qui concerne le frottement et l'usure dans la gorge des baladeurs. Il devient alors nécessaire, si on utilise ces matériaux qui sont d'un prix de revient plus faible, de réaliser un traitement de surface sur les extrémités des bras de la fourchette destinées à entrer en contact avec la gorge des baladeurs. Si l'on utilise par exemple une fourchette de commande en acier, on procède habituellement à un traitement thermique à haute fréquence ou à un revêtement de surface en chrome de grande pureté ou en molybdène. (Voir p. ex., GB-A-957 889 et FR-A-1 561 563).

Ces traitements de surface entraînent à nouveau une augmentation du prix de revient de l'ensemble et l'on constate par ailleurs un fonctionnement bruyant des fourchettes de ce type en contact avec les baladeurs.

On a déjà prévu par exemple dans FR-A-1 482 014, de monter des patins séparés sur le corps de la fourchette afin de permettre de choisir des matériaux différentes pour les patins destinés à entrer en contact avec l'organe de commande et pour la fourchette elle-même. L'utilisation de patins séparés permet par exemple de réaliser la fourchette de commande en n'importe quel matériau suffisamment résistant et de faible prix de revient tel que la fonte d'aluminium ou d'acier, la fonte à graphite sphéroïdal ou analogue. On peut également réaliser la fourchette en tôle découpée ou emboutie ou en matière plastique synthétique armée de fibres de verre, les dimensions de la fourchette étant convenablement choisies de façon à résister aux efforts de synchronisation ou de crabotage. Le patin coopérant avec la fourchette peut quant à lui être réalisé en un matériau anti-frottement avec une matière plastique synthétique polyamide non chargé tel que le DELRIN (marque déposée) ou encore en tôle revêtue d'un matériau anti-frottement tel que le TEFLON (marque déposée) ou une tôle ayant subi un traitement de sulfuration. (Voir par exemple FR-A-1 600 221).

La présente invention a pour objet de réaliser une telle fourchette de commande de synchronisation comprenant des patins de friction séparés dont la fixation sur l'extrémité des bras de la fourchette puisse se faire de manière aisée, le patin étant maintenu convenablement lors d'une manipulation de la fourchette de commande avant son montage dans la boîte de vitesses (voir par exemple. US-A-3 257 861 et DE-B-2 425 514) et ne pouvant pas s'échapper lors du fonctionnement même après une usure de ses parois de frottement.

La fourchette de commande de synchronisation et de crabotage pour boîte de vitesses selon l'invention comprend deux patins de friction emboîtés chacun sur l'extrémité des deux bras de la fourchette et destinés à entrer en contact avec la périphérie d'un organe de commande tel qu'un pignon baladeur ou un manchon de crabotage. Selon l'invention, chaque patin comprend à l'intérieur de ses flancs latéraux, deux ergots pouvant être encliquetés dans deux encoches pratiquées dans les faces externes latérales des extrémités des bras de la fourchette.

Dans un premier mode de réalisation préféré, les encoches s'étendent sur toute la hauteur des bras de la fourchette. Chaque patin comporte alors en outre des bords rabattus sur la face périphérique externe des extrémités des bras de la fourchette. Grâce à l'existence de ces bords rabattus qui s'étendent avantageusement uniquement sur une portion de la longueur du patin, les patins une fois encliquetés sur les extrémités des bras de la fourchette sont convenablement maintenus sur ces derniers pendant les différentes manipulations de la fourchette de commande avant son montage dans la boîte de vitesses.

Dans un deuxième mode de réalisation, également préféré, les encoches pratiquées sur les faces externes des extrémités des bras de la fourchette s'étendent uniquement sur une portion de la hauteur desdits bras. Les ergots des patins assurent alors par simple coopération avec ces encoches non traversantes le maintien convenable des patins sur les extrémités des bras de la fourchette lors des manipulations de cette dernière avant son montage dans la boîte de vitesses.

Pour assurer le maintien convenable des patins sur les extrémités des bras de la fourchette lors du fonctionnement de la boîte de vitesses et en particulier lors de la rotation du pignon baladeur ou du manchon de crabotage qui constitue l'organe de commande avec lequel coopèrent les patins, on choisit la hauteur des ergots desdits patins de façon qu'elle soit supérieure à l'épaisseur des flancs latéraux des patins additionnée du jeu fonctionnel avant usure entre les flancs latéraux des patins et les flancs correspondants de l'organe de commande. De cette manière, les ergots se trouvent toujours maintenus dans les encoches des bras de la fourchette même lorsque les flancs latéraux des patins sont complètement usés. Dans toutes les conditions de fonctionnement les patins se trouvent donc maintenus par leurs ergots à l'encontre des efforts dus à la rotation du baladeur, efforts qui ont tendance à les séparer des extrémités des bras de la fourchette de commande.

L'invention sera mieux comprise à l'étude de la description détaillée de deux modes de réalisation pris à titre d'exemples nullement limitatifs et illustrés par les dessins annexés sur lesquels :

la figure 1 est une vue en élévation d'une fourchette de commande selon l'invention équipée de patins de friction et représentée avant son montage dans la boîte de vitesses ;

la figure 2 est une vue agrandie en coupe en élévation selon II-II de la figure 4 de l'extrémité d'un bras de la fourchette de la figure 1 équipée de son patin de friction ;

la figure 3 est une vue partielle en coupe de dessus d'une des extrémités d'un bras de la fourchette de la figure 1 après son montage dans la gorge d'un baladeur de boîte de vitesses, cette vue correspondant à la ligne III-III de la figure 2 ;

la figure 4 est une vue en coupe selon un plan radial repéré IV-IV sur la figure 2 du baladeur montrant également l'extrémité d'un bras de la fourchette de la figure 1 ;

la figure 5 est une vue en élévation analogue à la figure 1 d'un deuxième mode de réalisation d'une fourchette de commande selon l'invention ; et

les figures 6, 7 et 8 sont des vues en coupe correspondant aux lignes VI-VI, VII-VII et VIII-VIII représentées respectivement sur la figure 8 et sur la figure 6, ces vues étant analogues en ce qui concerne le deuxième mode de réalisation de la figure 5 aux figures 2, 3 et 4 pour le premier mode de réalisation ;

la figure 9 représente très schématiquement les différentes épaisseurs de parois d'un patin d'une fourchette selon l'invention montée dans la gorge d'un baladeur avant usure, la vue étant prise de dessus de manière analogue aux figures 3 et 7 ; et

la figure 10 est une vue analogue à la figure 9 après usure.

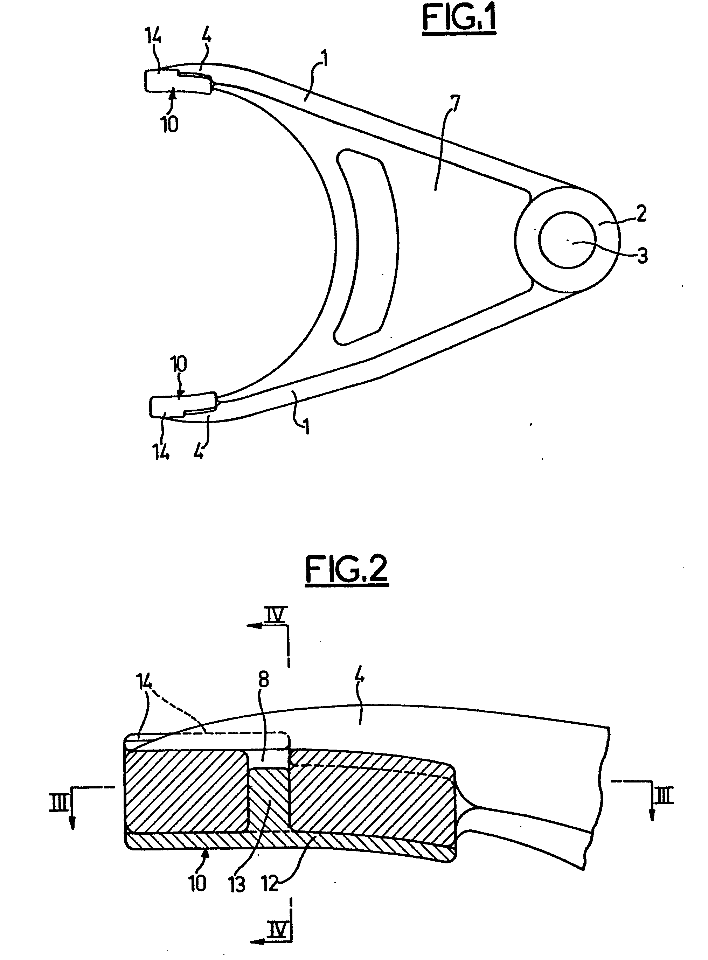

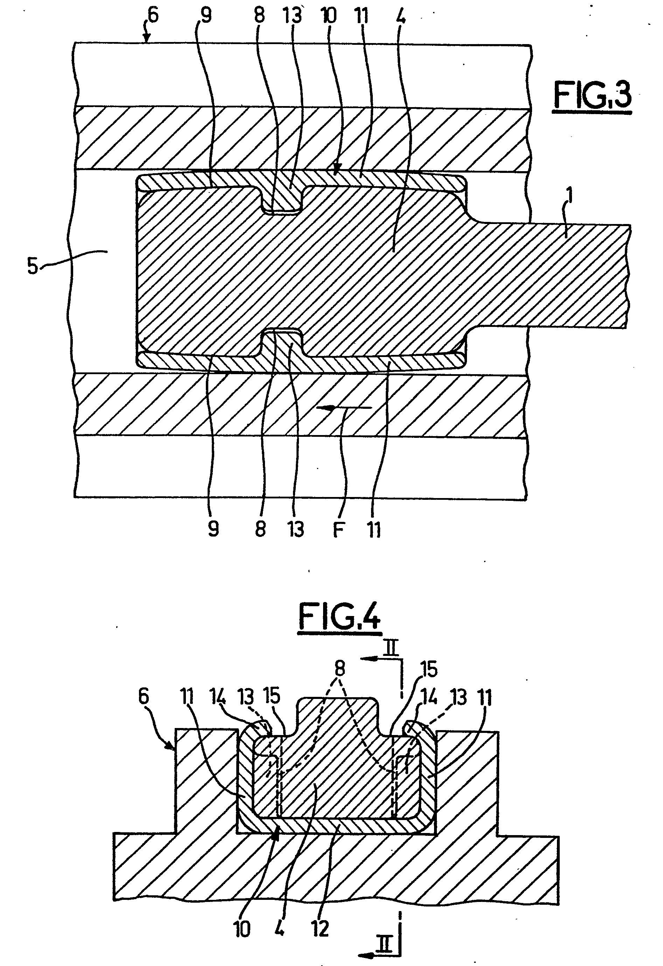

Telle qu'elle est représentée sur les figures 1 à 4, la fourchette de commande comprend deux bras 1 reliés entre eux par un manchon 2 comportant un alésage 3 destiné à recevoir un coulisseau de boîte de vitesses non représenté sur les figures. Les bras 1 présentent des extrémités 4 convenablement écartées afin de pouvoir coopérer avec la gorge 5 d'un baladeur 6 visible sur les figures 3 et 4. La fourchette de commande comprenant les bras 1, le manchon 2 et une nervure de renforcement 7 est avantageusement réalisée par moulage d'un matériau susceptible de résister aux efforts de synchronisation et de faible prix de revient, par exemple l'aluminium, l'acier, une matière plastique armée de fibres de verre etc. On comprendra bien entendu que la fourchette pourrait également être réalisée en tôle découpée ou emboutie.

Chaque extrémité 4 d'un bras 1 de la fourchette présente une saignée ou encoche 8 pratiquée sur les faces externes latérales 9 de l'extrémité 4 qui présente, comme on peut le voir sur la figure 3, une épaisseur plus importante que celle du bras 1 dont elle est solidaire. Les encoches 8 sont de préférence venues de moulage lorsque la fourchette est réalisée par moulage ou directement découpées lors de la fabrication de la fourchette si cette dernière est fabriquée par découpage. On évite ainsi toute opération d'usinage ce qui réduit le prix de revient de l'ensemble.

Chaque extrémité 4 d'un bras de la fourchette est équipée d'un patin de friction 10 présentant en section dans un plan sensiblement radial par rapport au baladeur, comme on peut le voir sur la figure 4, une forme de cuvette dont les flancs latéraux 11 viennent en contact de frottement avec les flancs latéraux correspondants de la gorge 5 du baladeur 6. Les deux flancs latéraux 11 sont reliés par un flanc périphérique 12 qui présente une forme sensiblement cylindrique adaptée à la périphérie cylindrique du fond de la gorge 5 du baladeur 6. On notera qu'afin d'autoriser un léger débattement des bras 1 de la fourchette, les faces externes des flancs latéraux 11 ne sont pas absolument planes et présentent au contraire une légère courbure comme on peut le voir sur la figure 3.

Chaque flanc latéral 11 présente dans sa portion médiane à l'opposé de la face extérieure entrant en contact avec les flancs radiaux de la gorge 5, un ergot 13 dont les dimensions sont adaptées pour pouvoir pénétrer dans les encoches 8. On notera que les encoches 8 s'étendent sur toute la hauteur de l'extrémité 4 des bras 1 comme on peut le voir en particulier sur la figure 4. Il en résulte que ces encoches 8 traversent toute l'épaisseur de l'extrémité 4, les patins 10 pouvant être encliquetés depuis l'intérieur vers l'extérieur, les ergots 13 pénétrant dans les encoches 8. Les deux flancs latéraux 11 comportent en outre des bords 14 qui sont rabattus sur la face périphérique externe 15 de l'extrémité 4. Ces bords rabattus maintiennent donc les patins 10 après encliquetage par déformation élastique du flanc 11 sur les extrémités 4 de la fourchette avant son montage dans la boîte de vitesses comme représenté par exemple sur la figure 1. Les bords rabattus 14 empêchent la désolidarisation des patins 10 des extrémités 4, désolidarisation qui ne serait pas empêchée par les seuls ergots 13 compte tenu du caractère traversant des encoches 8.

Les bords rabattus 14 ne s'étendent que sur une portion de la longueur des patins 10 comme on peut le voir sur les figures 1 et 2 où l'on notera que le bord rabattu 14 s'étend depuis le bord libre de l'extrémité 4 jusqu'au-delà de l'ergot 13.

Lors du fonctionnement de la fourchette de commande de l'invention, le baladeur 6 est entraîné en rotation dans le sens contraire de la flèche F de la figure 3 ce qui produit un effort de réaction dirigé dans le sens de ladite flèche tendant à désolidariser le patin 10 de l'extrémité 4 des bras 1. Cette désolidarisation est empêchée par l'existence des ergots 13 maintenus dans les encoches 8. Il convient cependant de choisir convenablement la hauteur des ergots 13 afin qu'ils ne puissent pas s'échapper des encoches 8 lorsque l'épaisseur des flancs latéraux 11 a été réduite par usure après une certaine durée de fonctionnement.

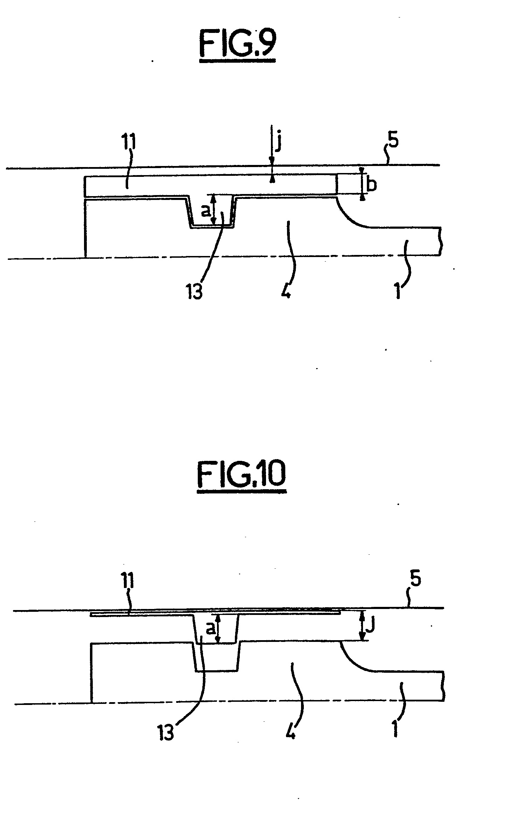

Les figures 9 et 10 illustrent schématiquement cette situation. On retrouve sur la figure 9 les mêmes pièces qui portent les mêmes références. Sur cette figure qui représente schématiquement les pièces avant usure, la hauteur totale de l'ergot 13, est référencée a. L'épaisseur du flanc latéral 11 est b et le jeu entre la face externe du flanc 11 et la face correspondante de la gorge 5 du baladeur est j. Ce jeu avant usure dont la valeur est exagérée sur la figure 9 est en pratique très faible et il n'a pas été représenté sur les figures 1 à 4 afin de ne pas les compliquer.

Sur la figure 10, les mêmes pièces ont été représentées après une usure supposée pratiquement complète de la paroi du flanc latéral 11. Dans ce cas, si l'on admet que l'épaisseur du flanc 11 est réduite à zéro, le jeu après usure est J. On voit donc que la hauteur a de l'ergot 13 doit être en tout cas supérieure à ce jeu maximal après usure J si l'on veut éviter que les efforts exercés lors du fonctionnement sur le patin de friction 10 ne soient capables de le désolidariser de l'extrémité 4. Si l'on considère les figures 9 et 10, on voit que le jeu après usure est toujours inférieur au jeu avant usure additionné de l'épaisseur de départ du flanc 11. On a donc :

$$J \leq b + j.$$

Pour être certain d'éviter la désolidarisation précitée il suffit donc de faire en sorte que l'on ait :

$$a > b + j$$

c'est-à-dire que la hauteur a des ergots soit choisie supérieure à l'épaisseur des flancs latéraux b des patins 10 additionnée du jeu fonctionnel j avant usure.

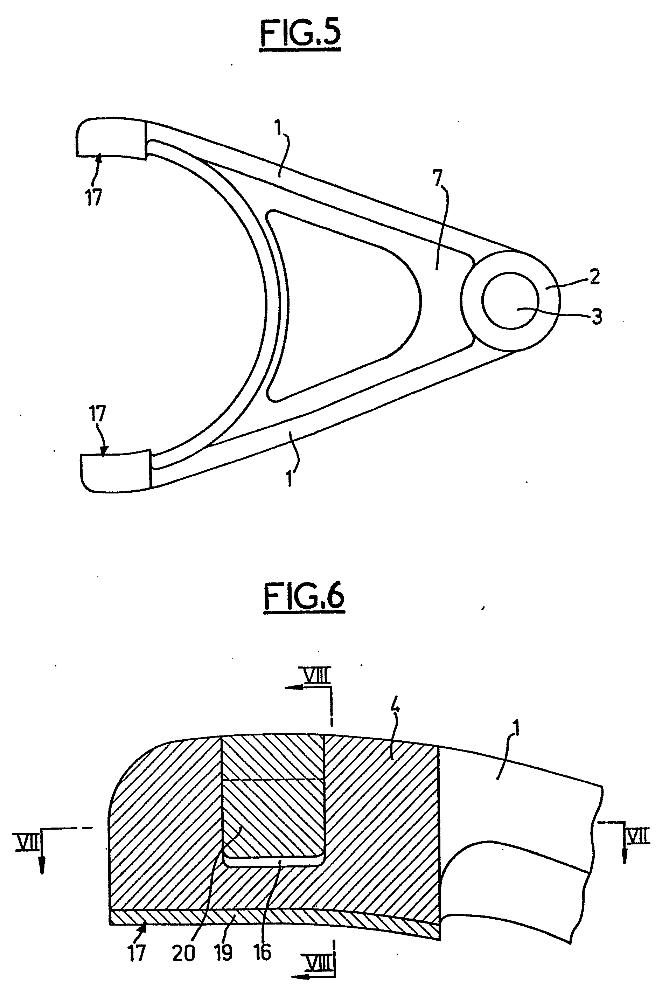

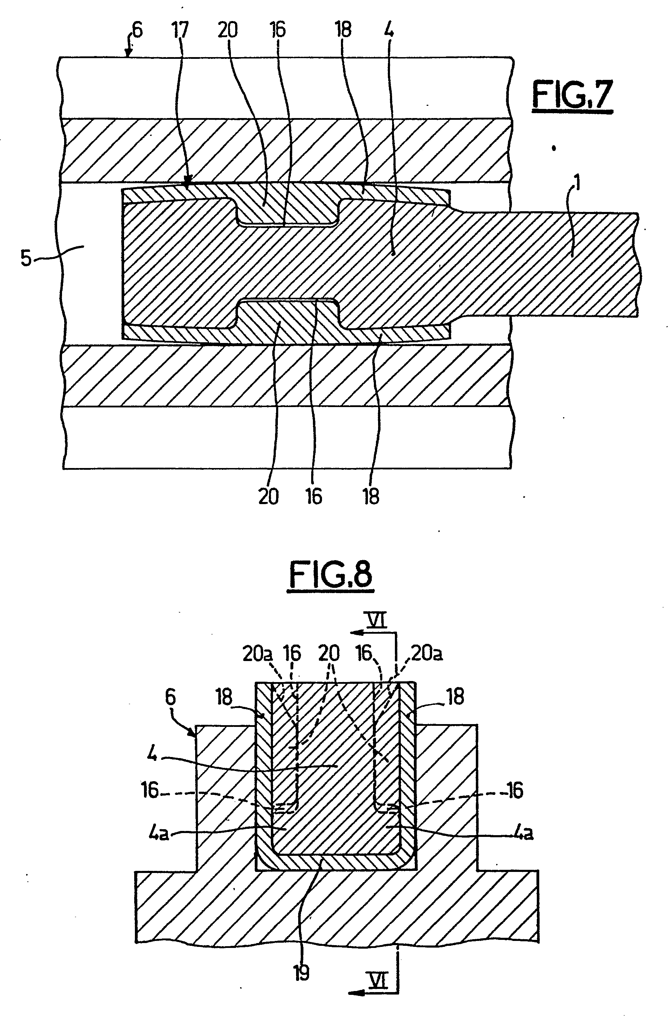

Les figures 5 à 8 illustrent un deuxième mode de réalisation dans lequel les pièces analogues portent les mêmes références. Dans ce mode de réalisation, chaque extrémité 4 d'un bras 1, comporte deux encoches 16 pratiquées sur ses faces externes latérales mais ne s'étendant que sur une portion de la hauteur de l'extrémité 4 comme on peut le voir sur la figure 8. Autrement dit, les encoches 16 ne sont pas traversantes comme l'étaient les encoches 8 du premier mode de réalisation, une portion pleine 4a subsistant dans le bas de l'extrémité 4 c'est-à-dire en direction de l'axe du baladeur 6. Les patins de friction 17 montés sur les extrémités 4 présentent comme précédemment des flancs latéraux 18 entrant en contact avec les flancs correspondants de la gorge 5 du baladeur 6 et reliés entre eux par un flanc périphérique 19 de même configuration que le flanc 12 du premier mode de réalisation. Les flancs latéraux 18 présentent comme précédemment sur leur face interne un ergot 20 qui pénètre dans les encoches 16 et qui présente une face externe chanfreinée 20a visible sur la figure 8 facilitant l'encliquetage des patins 17 depuis l'intérieur vers l'extérieur par déformation des flancs 18 autour de la portion 4a de l'extrémité 4.

Contrairement à ce qui était le cas pour les ergots 13 du premier mode de réalisation, les ergots 20 ont une double fonction. Comme les ergots 13 ils permettent tout d'abord d'assurer le maintien convenable des patins 17 sur les extrémités 4 lors du fonctionnement de la boîte de vitesses en évitant une désolidarisation des patins 17 lors de la rotation du baladeur 6. Les ergots 20 ont pour deuxième fonction de maintenir en position les patins 17 lors de la manipulation de la fourchette avant son montage dans la boîte de vitesses comme représenté sur la figure 5. Les ergots 20 une fois encliquetés dans les encoches 16 ne peuvent en effet plus s'échapper étant donné que lesdites encoches ne sont pas traversantes.

On notera en outre que la hauteur des flancs latéraux 18 des patins 17 ainsi que la hauteur correspondante des extrémités 4 est supérieure dans ce second mode de réalisation comme on peut le voir sur les figures 5, 6 et 8 en les comparant aux figures 1, 2 et 4. On notera en outre, que la dimension dans le sens périphérique des ergots 20 et des encoches 16 comme représenté sur la figure 7 est également supérieure à la dimension de ces mêmes éléments dans le premier mode de réalisation comme on peut le voir en comparant à la figure 7 à la figure 3.

A part ces différences, le fonctionnement de l'ensemble est le même en particulier en ce qui concerne le choix de la hauteur a des ergots 20 en fonction de l'épaisseur b des flancs latéraux 18 avant usure et du jeu fonctionnel j avant usure.

**Revendications**

1. Fourchette de commande de synchronisation et de crabotage pour boîte de vitesses comprenant deux patins de friction (10 ; 17) emboîtés sur l'extrémité (4) des deux bras (1) de la fourchette et destinés à entrer en contact avec la périphérie (5) d'un organe de commande (6), caractérisée par le fait que chaque patin (10 ; 17) comprend à l'intérieur de ses flancs latéraux (11 ;

18), deux ergots (13 ; 20) pouvant être encliquetés dans deux encoches (8 ; 16) pratiquées dans les faces externes latérales de l'extrémité (4) des deux bras (1) de la fourchette.

2. Fourchette de commande selon la revendication 1, caractérisée par le fait que les encoches (8) s'étendent sur toute la hauteur de l'extrémité (4) des bras (1) de la fourchette, chaque patin (10) comportant en outre des bords rabattus (14) sur la face périphérique externe (15) de l'extrémité (4) du bras (1) de la fourchette.

3. Fourchette de commande selon la revendication 2, caractérisée par le fait que les bords rabattus (14) s'étendent sur une portion de la longueur des patins (10).

4. Fourchette de commande selon la revendication 1, caractérisée par le fait que les encoches (16) s'étendent sur une portion de la hauteur de l'extrémité (4) des bras (1) de la fourchette.

5. Fourchette de commande selon l'une quelconque des revendications précédentes, caractérisée par le fait que les ergots (13 ; 20) sont pratiqués dans la portion médiane de la longueur des patins (10 ; 17).

6. Fourchette de commande selon l'une quelconque des revendications précédentes caractérisée par le fait que la hauteur (a) des ergots (13 ; 20) est supérieure à l'épaisseur (b) des flancs latéraux (11 ; 18) des patins (10 ; 17) additionnée du jeu fonctionnel (j) avant usure entre les flancs latéraux (11 ; 18) des patins et les flancs (5) correspondants de l'organe de commande (6).

7. Fourchette de commande selon l'une quelconque des revendications précédentes et fabriquée par moulage ou découpage caractérisée par le fait que les encoches (8 ; 16) sont produites directement pendant le moulage ou le découpage.

**Claims**

1. A gear engagement and synchronizing control fork for gearboxes comprising two friction pads (10 ; 17) fitted onto the end (4) of two arms (1) of the fork and adapted to come into contact with the periphery (5) of a control component (6), characterized in that each pad (10 ; 17) comprises inside its lateral side sections (11 ; 18) two lugs (13 ; 20) which can be clicked into two notches (8 ; 16) made in the lateral outer faces of the end (4) of the fork's two arms (1).

2. The control fork according to claim 1, characterized in that the notches (8) extend throughout the height of the end (4) of the arms (1) of the fork, with each pad (10) also comprising flanges (14) folded over the outer peripheral face (15) of the end (4) of the fork arm (1).

3. The control fork according to claim 2, characterized in that the folded flanges (14) extend over a portion of the length of the pads (10).

4. The control fork according to claim 1, characterized in that the notches (16) extend over a portion of the height of the end (4) of the fork arms (1).

5. The control fork according to any of the preceding claims, characterized in that the lugs (13 ; 20) are made on the middle portion of the length of the pads (10 ; 17).

6. The control fork according to any of the preceding claims, characterized in that the height (a) of the lugs (13 ; 20) exceeds the thickness (b) of the lateral sides (11 ; 18) of the pads (10 ; 17) plus the functional clearance (j), before wear, between the lateral sides (11 ; 18) of the pads and the corresponding sides of the control component (6).

7. The control fork according to any of the preceding claims and manufactured by moulding or cutting out, characterized in that the notches (8 ; 16) are produced directly during the moulding or cutting out operation.

**Ansprüche**

1. Synchronisations- und Klauenkupplungs-schaltgabel für ein Wechselgetriebe mit zwei Reibklötzen (10 ; 17), die in die Enden (4) zweier Arme (1) der Gabel eingepasst sind und dazu bestimmt sind, mit dem Umfang (5) einer Steuereinrichtung (6) in Eingriff zu kommen, dadurch gekennzeichnet, dass jeder Reibklotz (10 ; 17) im Inneren seiner Seitenflanken (11 ; 18) zwei Nocken (13 ; 20) umfasst, die in zwei Aussparungen (8 ; 16) in den seitlichen Aussenflächen an den Enden (2) der beiden Arme (1) der Gabel einrasten können.

2. Schaltgabel gemäss Anspruch 1, dadurch gekennzeichnet, dass sich die Aussparungen (8) über die gesamte Höhe des Endes (4) der Arme (1) der Gabel erstrecken, wobei jeder Reibklotz (10) ferner auf der äusseren Umfangsfläche (15) des Endes (4) des Armes (1) der Gabel umbördelte Ränder (14) enthält.

3. Schaltgabel gemäss Anspruch 2, dadurch gekennzeichnet, dass sich die umbördelten Ränder (14) über einen Teil der Länge der Reibklotze (10) erstrecken.

4. Schaltgabel gemäss Anspruch 1, dadurch gekennzeichnet, dass sich die Aussparungen (16) über einen Teil der Höhe des Endes (4) der Arme (1) der Gabel erstrecken.

5. Schaltgabel nach einem beliebigen der vorstehenden Ansprüche, dadurch gekennzeichnet, dass die Nocken (13 ; 20) im Mittelteil der Länge der Reibklötze (10 ; 17) angeordnet sind.

6. Schaltgabel gemäss einem beliebigen der vorstehenden Ansprüche, dadurch gekennzeichnet, dass die Höhe (a) der Nocken (13 ; 20) grösser ist als die Dicke (b) der Seitenflanken (11 ; 18) der Reibklötze (10 ; 17) vergrössert um das Betriebsspiel (j) von der Abnützung zwischen den Seitenflanken (11 ; 18) der Reibklötze und den zugeordneten Flanken (5) der Steuereinrichtung (6).

7. Schaltgabel gemäss einem beliebigen der vorstehenden Ansprüche, die durch Formgiessen oder Stanzen hergestellt ist, dadurch gekennzeichnet, dass die Aussparungen (8 ; 16) direkt beim Formguss bzw. beim Stanzen hergestellt werden.

FIG.1

FIG.2

6  9  8  13  10  11  4

## FIG.3

5

1

9  8  13  F  11

## FIG.4

II

8  15

6  11  14  13  15  14  13  11

10  4  12

II

2

## FIG.5

## FIG.6

# FIG.7

# FIG.8

4

# FIG.9

# FIG.10